# EUROPÄISCHE PATENTSCHRIFT

(11) **EP 2 064 451 B1**
(45) Veröffentlichungstag und Bekanntmachung des Hinweises auf die Patenterteilung: **13.03.2013**
(21) Anmeldenummer: 07725157.7
(22) Anmeldetag: 12.05.2007
(51) Int. Cl.: F15B 13/08

(54) **FLUIDTECHNISCHES GERÄT MIT LICHTLEITER**
FLUID-TECHNICAL ASSEMBLY HAVING AN OPTICAL WAVEGUIDE
APPAREIL FLUIDIQUE DOTÉ D'UN CONDUCTEUR DE LUMIÈRE

(43) Veröffentlichungstag der Anmeldung: 03.06.2009
(73) Patentinhaber: FESTO AG & Co. KG, 73734 Esslingen (DE)
(72) Erfinder: BOGDANOWICZ, Gregorz, 73760 Ostfildern (DE)
(74) Vertreter: Abel, Martin
(86) Internationale Anmeldenummer: PCT/EP2007/004237
(87) Internationale Veröffentlichungsnummer: WO 2008/138374

(56) Entgegenhaltungen:
- EP-A- 0 606 048
- EP-A- 1 199 479
- EP-A- 1 484 511
- US-A- 4 195 662
- US-A- 5 327 328
- US-A- 5 427 140
- US-A1- 2005 022 877

## Beschreibung

Die Erfindung betrifft ein fluidtechnisches Gerät, mit mindestens einer Zustandsanzeigeeinheit umfassend eine verborgen in dem Gerät untergebrachte Lichtquelle und einen die Lichtsignale der Lichtquelle zu einem Anzeigebereich an der Außenseite des Gerätes leitenden Lichtleiter, wobei die Lichtquelle zur Ausgabe von polychromatischem Licht ausgebildet ist und in den Strahlweg des Lichtes zwischen der Lichtquelle und dem Anzeigebereich mindestens ein die am Anzeigebereich sichtbare Lichtfarbe der Lichtsignale bestimmender Farbfilter eingeschaltet ist und wobei der Farbfilter als zusätzlich zu dem Lichtleiter vorhandenes Farbfilterelement ausgebildet ist.

Aus der DE 201 05 982 U1 geht ein als Ventilgerät ausgebildetes fluidtechnisches Gerät hervor, das mehrere aneinander angesetzte, elektrisch betätigbare Ventileinheiten beinhaltet, deren Betriebszustand durch je eine Zustandsanzeigeeinheit visuell zur Anzeige gebracht wird. In einem stirnseitig an die Anordnung von Ventileinheiten angebrachten Gehäuse befindet sich eine Platine, die mehrere LEDs trägt, von denen jeweils ein Lichtleiter zu einem an der Außenseite des Ventilgerätes zugeordneten Anzeigebereich führt. Die von den LEDs ausgesandten Lichtsignale werden durch den zugeordneten Lichtleiter zu dem Anzeigebereich geleitet, wobei der Lichtleiter die Möglichkeit bietet, den Anzeigebereich unabhängig vom Unterbringungsort der Lichtquelle relativ variabel zu platzieren.

Die EP 0 606 048 A1 beschreibt ebenfalls ein mit Ventileinheiten ausgestattetes fluidtechnisches Gerät, wobei in einem Ventilträger eine Leiterplatte angeordnet ist, die eine zur Schaltanzeige dienende Leuchtdiode trägt. Die Leuchtdiode durchgreift in einem Anzeigebereich eine Aussparung des Ventilträgers, so dass ihre Lichtsignale ohne zusätzlichen Lichtleiter direkt erkennbar sind.

Bei dem genannten Stand der Technik rufen die für den Betrachter sichtbaren Lichtsignale stets den gleichen optischen Eindruck hervor. Es ist daher manchmal schwierig, gewisse Signale voneinander zu unterscheiden, so dass Missverständnisse bei der Beurteilung der Lichtsignale auftreten können.

Aus der US 5 427 140 A ist ein fluidtechnisches Gerät der eingangs genannten Art bekannt, das als Ventilanordnung ausgebildet ist und das eine Lichtquelle aufweist, die durch ein transparentes Material hindurch Licht aussendet, das von einem Betrachter als farbiges Lichtsignal erkannt wird, wenn durch entsprechende Positionierung eines Drehknopfes ein in dem Drehknopf ausgebildeter Kanal mit der Lichtquelle fluchtet, wobei in dem Kanal eingefärbte Anzeigeelemente angeordnet sind.

Die US 4 195 662 A beschreibt ein Ventil, das im Innern eines Gehäuses eine Lichtquelle aufweist, der eine eingefärbte Linse vorgelagert ist.

Es ist eine Aufgabe der vorliegenden Erfindung, Maßnahmen zu treffen, die die Identifikationsmöglichkeit optischer Zustandsanzeigesignale verbessern.

Zur Lösung dieser Aufgabe ist bei einem fluidtechnischen Gerät der eingangs genannten Art vorgesehen, dass das Farbfilterelement direkt an dem Lichtleiter angeordnet ist.

Auf diese Weise ist die für den Betrachter am Anzeigebereich sichtbare Lichtfarbe der Lichtsignale nicht auf eine einzige Lichtfarbe beschränkt. Durch den in den Strahlweg eingeschalteten Farbfilter kann die letztlich sichtbare Lichtfarbe variabel bestimmt werden. Das polychromatische Licht der Lichtquelle liefert ein großes Farbspektrum, aus dem durch den Farbfilter die gewünschte Lichtfarbe selektiert werden kann. So hat man beispielsweise die Möglichkeit, innerhalb eines fluidtechnischen Gerätes Zustandsanzeigeeinheiten mit unterschiedlichen Farbfiltern auszustatten, um je nach Betriebszustand farblich voneinander abweichende Lichtsignale auszugeben. Ist das fluidtechnische Gerät beispielsweise als Ventilgerät ausgebildet, das über mehrere Ventileinheiten verfügt, können den einzelnen Ventileinheiten - beispielsweise ihrer Wichtigkeit oder ihres Verwendungszweckes entsprechend - unterschiedliche Anzeigefarben zugeordnet werden. Die Lichtquelle kann hierbei stets vom gleichen Typ sein, wobei insbesondere auf eine LED zurückgegriffen wird, die polychromatisches, weißes Licht aussendet. Der Farbfilter ist ein zusätzlich zu dem Lichtleiter vorhandenes eigenständiges Farbfilterelement, wobei es von Vorteil ist, dass das Farbfilterelement direkt an dem Lichtleiter angeordnet ist, insbesondere derart, dass der Lichtleiter das Farbfilterelement trägt.

Zweckmäßigerweise ist der Farbfilter auswechselbar am fluidtechnischen Gerät angeordnet, so dass sich die Anzeigefarbe durch einfachen Austausch des Farbfilters variieren lässt. Zu dem fluidtechnischen Gerät können mehrere Farbfilter mit voneinander abweichender Filterwirkung gehören, so dass sie für die Ausgabe voneinander abweichender Lichtfarben verantwortlich sind und die man von Fall zu Fall selektiv installiert und verwendet. Besteht die Möglichkeit eines Austausches des Filterelementes, kann man unterschiedliche Lichtfarben unter Beibehaltung des Lichtleiters zur Verfügung stellen, indem einfach eines von mehreren Farbfilterelementen eingesetzt wird, die über voneinander abweichende optische Filterwirkungen verfügen.

Prinzipiell kann der Lichtleiter - anstelle des Begriffes "Lichtleiter" wird oft auch der Begriff "Lichtwellenleiter" verwendet - unmittelbar selbst so ausgebildet sein, dass er als Farbfilter fungiert. Am einfachsten erreicht man dies durch eine entsprechende Einfärbung in einem Farbton, der demjenigen der anzuzeigenden Lichtfarbe entspricht. Soll die angezeigte Lichtfarbe verändert werden, kann dies durch ein einfaches Auswechseln des gesamten Lichtleiters durchgeführt werden.

Ist ein gesondertes Farbfilterelement vorhanden, besteht der Lichtleiter zweckmäßigerweise aus einem Material, welches das Licht des gesamten sichtbaren Wellenlängenspektrums ungefiltert hindurchleitet. Man kann hier insbesondere auf ein farbloses, transparentes Kunststoffmaterial zurückgreifen. Ohne zusätzlichen Farbfilter würde ein solcher Lichtleiter in dem Anzeigebereich eine Lichtfarbe ausgeben, die unmittelbar der Lichtfarbe der Lichtquelle entspricht. Durch das zusätzliche Farbfilterelement lässt sich diese Lichtfarbe problemlos verändern.

Zweckmäßig ist es, wenn das Farbfilterelement im Rahmen einer leicht lösbaren Steckverbindung am Lichtleiter angeordnet ist. Dies begünstigt ein rasches Auswechseln. Beispielsweise ist eine Rastbefestigung möglich, um eine verliersichere Fixierung zu gewährleisten.

Das Farbfilterelement sitzt zweckmäßigerweise an einem der Lichtquelle zugeordneten inneren Endabschnitt und/oder an einem dem Anzeigebereich zugeordneten äußeren Endabschnitt des Lichtleiters. Insbesondere wenn das Farbfilterelement am inneren Endabschnitt des Lichtleiters angeordnet ist, kann dieser Endabschnitt stiftförmig ausgebildet sein und ein kappenförmig ausgebildetes Farbfilterelement aufnehmen.

Ein und dasselbe fluidtechnische Gerät kann über mehrere Funktionseinheiten verfügen, die jeweils eine Lichtquelle und einen Lichtleiter beinhalten. Mehreren Lichtleitern kann hier bei Bedarf ein gemeinsamer Farbfilter zugeordnet sein. Es können auch mehrere Lichtleiter in einem Lichtleitelement zu einer Baueinheit zusammengefasst werden. Letzteres empfiehlt sich insbesondere bei Ventilgeräten, die über mehrere Ventileinheiten verfügen, denen dann jeweils ein solches Lichtleitelement zugeordnet werden kann.

Weitere vorteilhafte Maßnahmen sind auch der nachfolgenden detaillierteren Beschreibung eines Ausführungsbeispiels des erfindungsgemäßen fluidtechnischen Gerätes zu entnehmen, mit der auf die beiliegende Zeichnung Bezug genommen wird. In dieser zeigen:

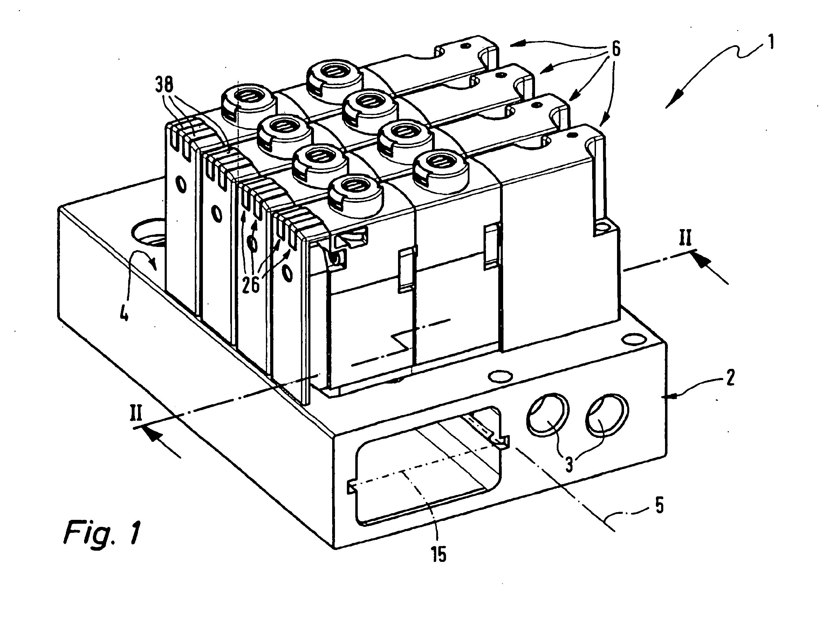

- Figur 1: ein als Ventilgerät ausgebildetes fluidtechnisches Gerät erfindungsgemäßer Bauart in einer perspektivischen Darstellung,
- Figur 2: das Gerät aus Figur 1 in einem Schnitt gemäß Schnittlinie II-II aus Figuren 1 und 3,
- Figur 3: eine nur teilweise Abbildung des fluidtechnischen Gerätes in einem Schnitt gemäß Schnittlinie III-III, und
- Figur 4: in perspektivischer Einzeldarstellung eine zu dem Gerät der Figuren 1 bis 3 gehörende Ventileinheit mit schrägem Blick auf die Unterseite.

Ein wesentlicher Aspekt der vorliegenden Erfindung besteht in der Ausgestaltung einer Zustandsanzeigeeinheit bei einem fluidtechnischen Gerät beliebiger Art. Die Beschreibung eines Ausführungsbeispiels erfolgt anhand eines zur Steuerung von Fluidströmungen dienenden Ventilgerätes 1, ohne dass damit jedoch eine Einschränkung verbunden sein soll. Beispiele für weitere zur Realisierung der Erfindung dienende fluidtechnische Geräte sind Vakuumerzeugergeräte, zur Aufbereitung von Druckluft verwendete Wartungsgeräte oder auch Antriebsgeräte wie Dreh- und Linearantriebe. Die nachstehenden grundsätzlichen Darlegungen gelten für alle Arten fluidtechnischer Geräte gemeinsam.

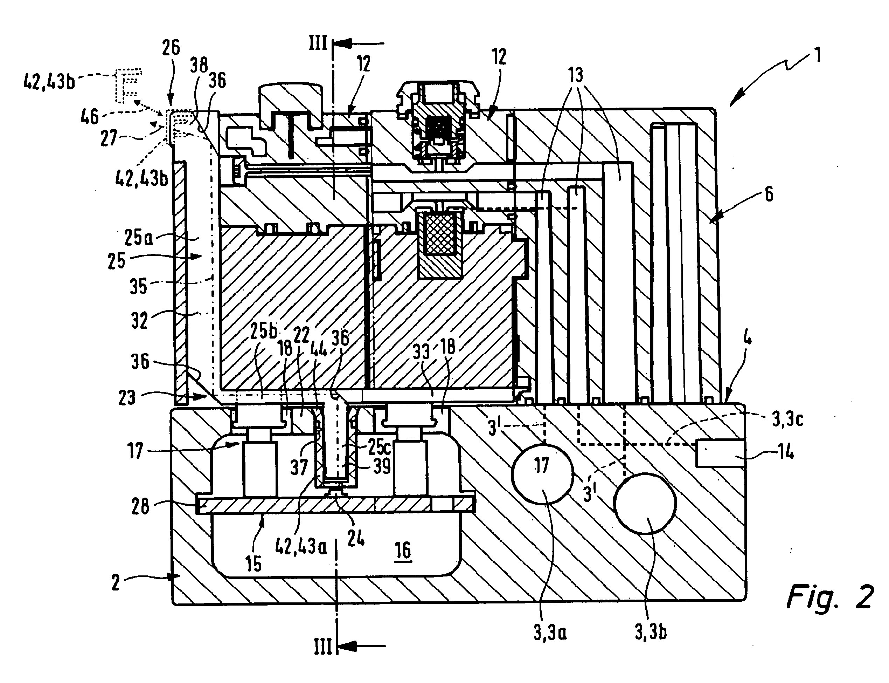

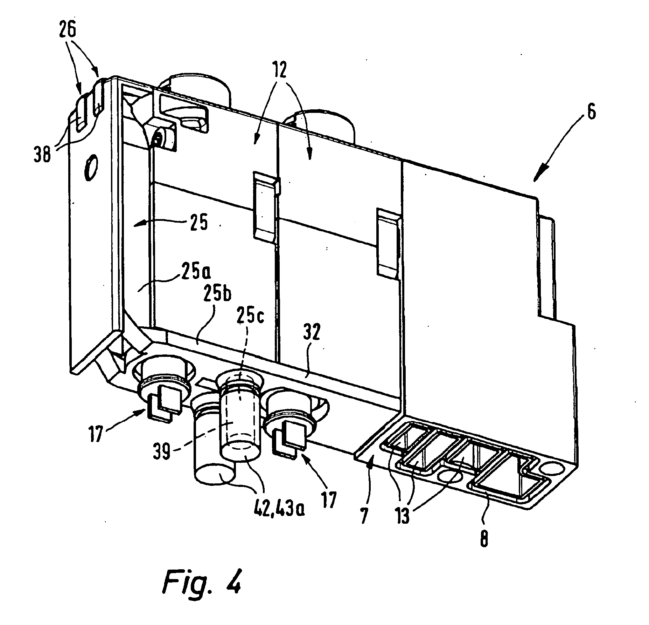

Das Ventilgerät 1 umfasst einen zum Beispiel plattenförmigen, bei Bedarf auch segmentierten Ventilträger 2, der von mehreren Ventilträgerkanälen 3 durchsetzt ist, die in Figur 2 zum Teil nur gestrichelt angedeutet sind. Der Ventilträger 2 definiert eine Bestückungsfläche 4, an der er mit mehreren in Richtung einer Hauptachse 5 des Ventilgerätes 1 aufeinanderfolgend angeordneten, elektrisch betätigbaren Ventileinheiten 6 bestückt ist. In Figur 4 ist eine solche Ventileinheit 6 einzeln abgebildet, wobei ein Blick auf die unten liegende Grundfläche 7 möglich ist, die unter Zwischenschaltung von Dichtungsmitteln 8 auf der Bestückungsfläche 4 aufliegt.

Jede Ventileinheit 6 beinhaltet mindestens ein elektrisch betätigbares Steuerventil 12, wobei exemplarisch pro Ventileinheit 6 zwei solcher Steuerventile 12 vorhanden sind. Ihre Darstellung weicht in Figur 2 voneinander ab, weil die Schnittebene einen versetzten Verlauf hat.

Bei den Steuerventilen 12 handelt es sich beispielsweise um Magnetventile, wenngleich auch andere Ventilarten verwendbar wären, beispielsweise Piezoventile oder elektrostatisch betätigte Ventile.

Die Steuerventile 12 kommunizieren mit im Innern der Ventileinheit 6 verlaufenden Ventilkanälen 13, die so an der Grundfläche 7 der Ventileinheit 6 ausmünden, dass sie in einer gewünschten Zuordnung mit den dort ausmündenden Ventilträgerkanälen 3 verbunden sind.

Die Ventilträgerkanäle 3 beinhalten beispielsweise einen mit einer Druckquelle verbindbaren Speisekanal 3a und mindestens einen mit einer Drucksenke, insbesondere der Atmosphäre, verbindbaren Abführkanal 3b. Diese beiden Kanäle 3a, 3b durchziehen den Ventilträger 2 in Richtung der Hauptachse 5 und münden über Zweigkanäle 3' zu jedem Flächenabschnitt der Bestückungsfläche 4 aus, an dem eine Ventileinheit 6 montierbar ist. Außerdem mündet an diesen Flächenabschnitten je mindestens ein individueller Arbeitskanal 3c der Ventilträgerkanäle 3, der andernends zu einer seitlichen Außenfläche des Ventilträgers 2 ausmündet und dort über eine Anschlussöffnung 14 verfügt, die den Anschluss eines zu betätigenden Verbrauchers ermöglicht, beispielsweise eines mittels Fluidkraft betätigbaren Antriebes.

Das Ventilgerät 1 wird insbesondere mit Druckluft betrieben, eignet sich aber auch für einen Betrieb mit anderen Gasen oder auch mit Flüssigkeiten.

Dem jeweiligen Betätigungszustand der Steuerventile 12 entsprechend, sind die Arbeitskanäle 3c jeweils entweder mit dem Speisekanal 3a oder mit dem Abführkanal 3b verbunden.

Je nach Ausgestaltung der Steuerventile 12 können auch andere Ventilfunktionalitäten verwirklicht werden. Beispielsweise könnten die Ventileinheiten 6 als vorgesteuerte Mehrwegeventile ausgeführt sein, die über ein durch Fluidkraft betätigbares Hauptventil verfügen, dessen Betriebszustand durch mindestens ein elektrisch betätigbares Steuerventil 12 vorgegeben wird.

Ihre elektrischen Betätigungssignale erhalten die Ventileinheiten 6 von einer verborgen im Ventilgerät 1 untergebrachten Signalübertragungseinrichtung 15. Diese erstreckt sich beispielhaft in einem den Ventilträger 2 in Richtung seiner Hauptachse 5 durchsetzenden Aufnahmekanal 16. Im betriebsfertigen Zustand des Ventilgerätes 1 ist der Aufnahmekanal 16 stirnseitig durch nicht weiter abgebildete Abschlusselemente verschlossen.

Die Signalübertragungseinrichtung 15 ist über elektrische Schnittstellenmittel 17 mit jeder Ventileinheit 6 elektrisch verbunden. Die elektrischen Schnittstellenmittel 17 durchsetzen hierbei geeignete Wanddurchbrechungen 18 des zwischen dem Aufnahmekanals 16 und der Bestückungsfläche 4 verlaufenden Wandabschnittes 22 des Ventilträgers 2.

Die Signalübertragungseinrichtung 15 kann für jede gängige Signalübertragungsart ausgelegt sein, insbesondere sowohl für parallele als auch für serielle Signalübertragung.

Über die Signalübertragungseinrichtung 15 hinweg erfolgt die Kommunikation mit einer nicht weiter dargestellten externen elektronischen Steuereinrichtung. Die Signalübertragungseinrichtung 15 verfügt hierzu, insbesondere an einem Endbereich, über eine geeignete zentrale elektrische Schnittstelleneinrichtung, beispielsweise über eine Multipol-Steckvorrichtung oder über eine Feldbus-Anschlussvorrichtung (nicht dargestellt).

Jede Ventileinheit 6 ist mit zwei Zustandsanzeigeeinheiten 23 ausgestattet. Diese sind in der Lage, gewisse, den einzelnen Ventileinheiten 6 zuzuordnende Betriebszustände durch Ausgabe von Lichtsignalen optisch anzuzeigen.

Je einem der beiden Steuerventile 12 ist eine der beiden Zustandsanzeigeeinheiten 23 zugeordnet. Ist nur ein Steuerventil 12 vorhanden, kann sich die Anzahl der Zustandsanzeigeeinheiten 23 entsprechend verringern. Prinzipiell ist es allerdings möglich, die Anzahl der Zustandsanzeigeeinheiten 23 unabhängig von der Anzahl der Steuerventile 12 oder der sonstigen Ausstattung der Ventileinheit 6 zu wählen.

Zu jeder Zustandsanzeigeeinheit 23 gehört eine im Ventilgerät 1 untergebrachte Lichtquelle 24. Exemplarisch verfügt jede Zustandsanzeigeeinheit 23 über eigene Lichtquelle 24. Die Lichtquelle 24 ist in der Lage, in Abhängigkeit vom Betriebszustand der zugeordneten Ventileinheit 6 elektrisch hervorgerufene Lichtsignale auszusenden. Auf diese Weise kann beispielsweise der Schaltzustand der Steuerventile 12 visualisiert werden, also ob sie beispielsweise momentan eine Offenstellung oder eine Schließstellung einnehmen. Auch eventuelle Störungsmeldungen können auf diese Weise optisch signalisiert werden.

Die Lichtquelle 24 ist an fertigungstechnisch günstiger Stelle im Innern des Ventilgerätes 1 untergebracht, was mit sich bringt, dass sie für außenstehende Betrachter verborgen ist. Ihre Lichtsignale sind also nicht ohne weiteres von außen her sichtbar. Zur Sichtbarmachung der Lichtsignale beinhaltet jede Zustandsanzeigeeinheit 23 einen Lichtleiter 25, der so im oder am Ventilgerät. 1 platziert ist, dass er die Lichtsignale der Lichtquelle 24 zu einem an der Außenseite des Ventilgerätes 1 liegenden Anzeigebereich 26 leitet. Die von der Lichtquelle 24 emittierten Lichtsignale werden also von dem Lichtleiter 25 so geführt, dass sie in dem Anzeigebereich 26 für außenstehende Beobachtet wahrnehmbar aus dem Ventilgerät 1 austreten. Der Austritt der Lichtsignale ist in der Zeichnung bei 27 durch einen Pfeil kenntlich gemacht.

Beispielhaft sind die Lichtquellen 24 bezüglich der Ventileinheiten 6 separat ausgebildet und Bestandteile der internen Signalübertragungseinrichtung 15. Selbige verfügt insbesondere über eine einstückige oder modular aufgebaute Platine 28, die im Bereich der elektrischen Schnittstellenmittel 17 die für die dort angeschlossene Ventileinheit 6 bestimmten Lichtquellen 24 trägt, beim Ausführungsbeispiel zwei Stück pro Ventileinheit 6. Durch den Ventilträger 2 ist die Lichtquelle 24 selbst zur Umgebung hin blickdicht abgeschirmt.

Die beiden einer jeweiligen Ventileinheit 6 zugeordneten Lichtleiter 25 sind zweckmäßigerweise zu einer Baueinheit in Gestalt eines einstückigen Lichtleitelementes 32 zusammengefasst. Dieses Lichtleitelement 32 verfügt über eine im wesentlichen L-förmige Gestalt mit zwei rechtwinkelig zueinander verlaufenden ersten und zweiten Schenkeln 33, 34. Der erste Schenkel 33 greift zwischen die Bestückungsfläche 4 und die Grundfläche 7 zwischen dem Ventilträger 3 und der Ventileinheit 6 hinein, wobei er von den elektrischen Schnittstellenmitteln 17 durchgriffen wird. Der zweite Schenkel 34 sitzt im Bereich einer Stirnseite der Ventileinheit 6 und erstreckt sich innerhalb dieser zu der dem Ventilträger 2 entgegengesetzten Oberseite der Ventileinheit 6. Jeder Lichtleiter 25 ist von einem lichtleitend ausgebildeten Abschnitt des Lichtleitelementes 32 gebildet, wobei schräg zu dem strichpunktiert angedeuteten Strahlverlauf 35 der Lichtsignale angeordnete Reflexionsflächen 36 den Lichtstrahlen die gewünschte Richtung verleihen.

Wie insbesondere aus Figur 2 ersichtlich ist, besitzen die Lichtleiter 25 einen abgestuften Längsverlauf. Ein erster Längenabschnitt 25a erstreckt sich ausgehend von dem Anzeigebereich 26 rechtwinkelig zu der Bestückungsfläche 4 bis zur Grundfläche 7, woran sich ein zwischen den Ventilträger 2 und die Ventileinheit 6 eingreifender, zur Bestückungsfläche 4 paralleler zweiter Längenabschnitt 25b anschließt, auf den ein wiederum zur Bestückungsfläche 4 rechtwinkeliger dritter Längenabschnitt 25c folgt, der durch eine Wanddurchbrechung 37 des Wandabschnittes 22 hindurch in den Aufnahmekanal 16 hineinragt. Der dritte Längenabschnitt 25c steht also rechtwinkelig von dem ersten Schenkel 33 des Lichtleitelementes 32 ab.

Das freie Ende des ersten Längenabschnittes 25a bei dem Anzeigebereich 26 definiert einen äußeren Endabschnitt 38 des jeweiligen Lichtleiters 25. Der entgegengesetzte dritte Längenabschnitt 25c definiert einen inneren Endabschnitt 39 des Lichtleiters 25, der in unmittelbarer Nähe der zugeordneten Lichtquelle 24 endet. Exemplarisch ist die Anordnung so getroffen, dass die Stirnfläche des inneren Endabschnittes 39 mit geringem Abstand der Lichtquelle 24 gegenüberliegt.

An dieser Stelle sei erwähnt, dass die Lichtleiter 25 einer Ventileinheit 5 nicht notwendigerweise zu einer Baueinheit zusammengefasst sein müssen, es kann sich ohne weiteres auch um voneinander getrennte Bauteile handeln.

Die folgende Beschreibung orientiert sich an nur einer Zustandsanzeigeeinheit 23. Die entsprechenden Ausführungen gelten entsprechend für die übrigen Zustandsanzeigeeinheiten 23.

Die Lichtquelle 24 der Zustandsanzeigeeinheit 23 ist so ausgebildet, dass sie beim Aufleuchten ein polychromatisches Licht ausgibt. Es handelt sich insbesondere um weißes Licht, welches das gesamte sichtbare Wellenlängenspektrum umfasst. Erzeugt wird es insbesondere von einer Leuchtdiode, wenngleich es sich auch um eine einfache Glühlampe handeln könnte.

Die Verwendung polychromatischen Lichtes anstelle eines monochromatischen Lichtes hängt damit zusammen, dass mit der Zustandsanzeigeeinheit 23 bezweckt ist, in dem Anzeigebereich 26 unterschiedliche sichtbare Lichtfarben der Lichtsignale hervorzurufen. Dies geschieht durch Ausfiltern von Licht bestimmter Wellenlänge(n) aus dem breiten Spektrum des von der Lichtquelle 24 zur Verfügung gestellten polychromatischen Lichtes. Die Filterung resultiert aus dem Einsatz mindestens eines Farbfilters 42, der in den Strahlweg des Lichtes zwischen der Lichtquelle 24 und dem Anzeigebereich 26 eingeschaltet ist.

Der Farbfilter 42 könnte unmittelbar von dem Lichtleiter 25 gebildet sein. Verwendet man beispielsweise einen rot eingefärbten Lichtleiter, wird außer dem Spektrum des roten Lichtes alles weitere sichtbare Licht absorbiert und bei Aktivierung der Lichtquelle 24 erscheint am Anzeigebereich 26 rotes Licht. In entsprechender Weise kann durch alternative Verwendung von anders eingefärbten Lichtleitern auch ein Signallicht mit anderer Farbe hervorgerufen werden.

Vorzugsweise, und auch beim Ausführungsbeispiel realisiert, erfolgt eine Auftrennung der Funktionen des bloßen Lichtleitens und des farblichen Filterns auf gesonderte Komponenten. Der Lichtleiter 25 besteht hier aus einem Material, das zweckmäßigerweise das Licht des gesamten sichtbaren Wellenlängenspektrums ungefiltert durchlässt. Hier bietet es sich an, den Lichtleiter aus einem farblosen, transparenten Kunststoffmaterial herzustellen, das sehr einfach in beliebiger Form herstellbar ist. Die getrennte Farbfilterung erfolgt mittels mindestens eines zusätzlich zu dem Lichtleiter 25 vorhandenen Farbfilterelement 43a, 43b, das mit dem Lichtleiter 25 kombiniert oder kombinierbar ist.

Bei dem in durchgezogenen Linien gezeigten Ausführungsbeispiel ist ein erstes Farbfilterelement 43a dem inneren Endabschnitt 39 des Lichtleiters 25 zugeordnet. Es sitzt direkt auf dem Lichtleiter 25, wobei es insbesondere kappenförmig ausgebildet ist und sich zur Montage im Rahmen eines Steckvorganges auf den stiftförmigen inneren Endabschnitt 39 des Lichtleiters 25 aufsetzen lässt. Durch diese Ausgestaltung ist derjenige Bereich des Lichtleiters 25, der bei nicht vorhandenem erstem Farbfilterelement 43a den Lichtsignalen der Lichtquelle 24 ausgesetzt wäre, komplett durch ein optisches Filtermaterial von dieser Lichtquelle 24 abgeschirmt. Das Licht kann also nur durch das erste Farbfilterelement 43a hindurch in den Lichtleiter 25 eintreten, so dass kein ungefiltertes Licht eintreten kann, das die Lichtfarbe möglicherweise verfälschen könnte.

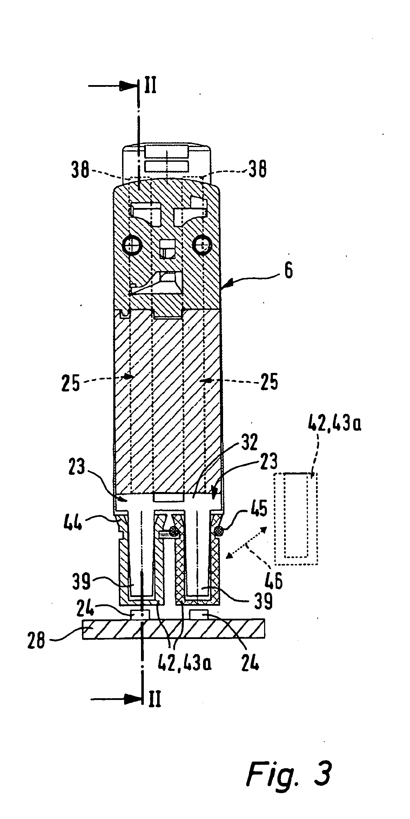

Beispielhaft ist das kappenförmige erste Farbfilterelement 43a von außen her durch die Wanddurchbrechung 37 hindurch in den Ventilträger 2 eingesetzt, so dass es zu der Lichtquelle 24 hin in den Aufnahmekanal 16 hineinragt. An einem Hineinfallen in den Aufnahmekanal 16 wird es durch eine konische Erweiterung 44 an seinem dem Kappenboden entgegengesetzten oberen Endbereich gehindert. Ein nur in Figur 3 angedeuteter Dichtungsring 45 dichtet zwischen dem Außenumfang des ersten Farbfilterelementes 43a und dem Innenumfang der Wanddurchbrechung 37 ab, so dass weder Verunreinigungen noch Feuchtigkeit hindurchtreten können. Alternativ oder zusätzlich kann der Dichtungsring 45 auch zur reibschlüssigen Fixierung des ersten Farbfilterelementes 43a in der Wanddurchbrechung 37 dienen.

In Figur 2 ist gestrichelt angedeutet, dass eventuell zusätzlich, insbesondere aber anstelle des ersten Farbfilterelementes 43a ein zweites Farbfilterelement 43b beispielsweise an dem äußeren Endabschnitt 38 des Lichtleiters 25 angebracht sein kann. Bei nicht vorhandenem erstem Farbfilterelement 43a gelangen somit die Lichtsignale der Lichtquelle 24 optisch ungefiltert durch den Lichtleiter 25 hindurch bis zur Austrittsstelle an dem Anzeigebereich 26, wo durch das zweite Farbfilterelement 43b die gewünschte Farbfilterung stattfindet.

Die Begriffe "erstes" und "zweites" Filterelement sind hier nicht als Zahlwörter zu verstehen, sondern sollen lediglich die Unterscheidung der verschiedenen Filterelemente erleichtern.

Wie schon beim ersten Farbfilterelement 43a ist zweckmäßigerweise auch das zweite Farbfilterelement 43b lösbar am Lichtleiter 25 angeordnet. Es kann insbesondere lösbar angesteckt sein. Dies ermöglicht eine einfache Montage und bei Bedarf auch einen Austausch durch ein anderes Farbfilterelement, das über eine abweichende optische Filterwirkung verfügt.

In Figur 2 ist hinsichtlich des zweiten Farbfilterelementes 43b und in Figur 3 hinsichtlich des ersten Farbfilterelementes 43a durch einen gestrichelten Doppelpfeil 46 die Austauschmöglichkeit der Farbfilterelemente 43a, 43b verdeutlicht. Es ist insbesondere daran gedacht, eine Mehrzahl von Farbfilterelementen unterschiedlicher farblicher Filterwirkung als Bestandteil des Ventilgerätes lose beizugeben, so dass der Anwender unmittelbar selbst die Möglichkeit hat, durch ausgewählte Verwendung eines bestimmten Farbfilterelementes die am Anzeigebereich 26 letztlich sichtbare Farbe der Lichtsignale zu bestimmen. Der Lichtleiter 25 selbst kann hierbei stets wieder verwendet werden, muss also nicht ebenfalls ausgetauscht werden. Dies vereinfacht die Handhabung und verringert die Herstellungskosten. Auch für die Farbfilterelemente 43a, 43b gilt, dass sie zweckmäßigerweise aus einem transparenten Material bestehen, dessen Farbton demjenigen entspricht, der als Lichtfarbe für die Lichtsignale gewünscht ist. Solche Farbfilterelemente lassen sich beispielsweise aus einem transparenten Kunststoffmaterial herstellen, das mit dem gewünschten Farbton eingefärbt ist.

In Figur 3 soll anhand der unterschiedlichen Schraffuren der bei ein und derselben Ventileinheit 6 verwendeten ersten Farbfilterelemente 43a deutlich gemacht werden, dass sich innerhalb eines Ventilgerätes 1 ohne weiteres Farbfilter mit unterschiedlicher optischer Filterwirkung kombinieren lassen. So wird beispielsweise erreicht, dass bei Aktivierung des einen Steuerventils 12 ein Lichtsignal in einer ersten Farbe ausgegeben wird und bei Aktivierung des zweiten Steuerventils 12 ein Lichtsignal in einer davon abweichenden zweiten Farbe.

Es versteht sich, dass der Anbringungsort für ein Filterelement 43a, 43b nicht auf die Endabschnitte des Lichtleiters 25 beschränkt ist. Der Lichtleiter könnte beispielsweise zwischen seinen beiden Endabschnitten 38, 39 auch eine Aussparung haben, in die sich ein Farbfilterelement einsetzen lässt.

Die Farbfilterelemente können so ausgebildet sein, dass sie aus eigener Kraft am Lichtleiter 25 gehalten werden, wie dies exemplarisch bei dem zweiten Farbfilterelement 43b der Fall ist. Dieses ist durch nicht weiter gezeigte Rastmittel im Rahmen einer lösbaren Rastverbindung fixiert. Andere Befestigungsmaßnahmen sind jedoch ebenfalls denkbar. Beispielsweise könnte man sich einen Schlitz vorstellen, in den das Farbfilterelement einschiebbar ist.

Abgesehen von dem Anzeigebereich 26 ist der Lichtleiter 25 beim Ausführungsbeispiel zur Umgebung hin vollständig lichtundurchlässig abgeschirmt, was teils durch den Ventilträger 2 und teils durch das Gehäuse der Ventileinheit 6 geschieht.

## Patentansprüche

1. Fluidtechnisches Gerät, mit mindestens einer Zustandsanzeigeeinheit (23) umfassend eine verborgen in dem Gerät untergebrachte Lichtquelle (24) und einen die Lichtsignale der Lichtquelle (24) zu einem Anzeigebereich (26) an der Außenseite des Gerätes leitenden Lichtleiter (25), wobei die Lichtquelle (24) zur Ausgabe von polychromatischem Licht ausgebildet ist und in den Strahlweg des Lichtes zwischen der Lichtquelle (24) und dem Anzeigebereich (26) mindestens ein die am Anzeigebereich (26) sichtbare Lichtfarbe der Lichtsignale bestimmender Farbfilter (42) eingeschaltet ist und wobei der Farbfilter (42) als zusätzlich zu dem Lichtleiter (25) vorhandenes Farbfilterelement (43a, 43b) ausgebildet ist, **dadurch gekennzeichnet, dass** das Farbfilterelement (43a, 43b) direkt an dem Lichtleiter (25) angeordnet ist.

2. Gerät nach Anspruch 1, **dadurch gekennzeichnet, dass** der Farbfilter (42) zur Veränderung der am Anzeigebereich (26) sichtbaren Lichtfarbe auswechselbar ausgebildet.

3. Gerät nach Anspruch 2, **dadurch gekennzeichnet, dass** mehrere Farbfilter (42) mit voneinander abweichender Filterwirkung vorhanden sind, die zur Veränderung der am Anzeigebereich (26) sichtbaren Lichtfarbe alternativ im Strahlweg des Lichtes platzierbar sind.

4. Gerät nach einem der Ansprüche 1 bis 3, **dadurch gekennzeichnet, dass** der Lichtleiter (25) das Farbfilterelement (43a, 43b) trägt.

5. Gerät nach einem der Ansprüche 1 bis 4, **dadurch gekennzeichnet, dass** das Farbfilterelement (43a, 43b) zur Veränderung der am Anzeigebereich (26) sichtbaren Lichtfarbe unabhängig von dem Lichtleiter (25) durch ein Farbfilterelement (43a, 43b) abweichender Filterwirkung austauschbar ist.

6. Gerät nach einem der Ansprüche 1 bis 5, **dadurch gekennzeichnet, dass** der Lichtleiter (25) aus einem Material besteht, das Licht des gesamten sichtbaren Wellenlängenspektrums ungefiltert hindurchleitet.

7. Gerät nach Anspruch 6, **dadurch gekennzeichnet, dass** der Lichtleiter (25) aus einem farblosen, transparenten Kunststoffmaterial besteht.

8. Gerät nach einem der Ansprüche 1 bis 7, **dadurch gekennzeichnet, dass** das Farbfilterelement (43a) im Innern des Gerätes an dem der Lichtquelle (24) zugeordneten inneren Endabschnitt (39) des Lichtleiters (25) angeordnet ist.

9. Gerät nach einem der Ansprüche 1 bis 7, **dadurch gekennzeichnet, dass** das Farbfilterelement (43b) an dem dem Anzeigebereich (26) zugeordneten äußeren Endabschnitt (38) des Lichtleiters (25) angeordnet ist.

10. Gerät nach Anspruch 8 oder 9, **dadurch gekennzeichnet, dass** das Farbfilterelement (43a) kappenförmig ausgebildet und auf einen stiftförmigen Endabschnitt (39) des Lichtleiters (25) aufgesetzt ist.

11. Gerät nach einem der Ansprüche 1 bis 10, **dadurch gekennzeichnet, dass** das Farbfilterelement (43a, 43b) an den Lichtleiter (25) lösbar angesteckt ist.

12. Gerät nach einem der Ansprüche 1 bis 11, **dadurch gekennzeichnet, dass** der Farbfilter (42) aus einem farbigen, transparenten Material besteht.

13. Gerät nach einem der Ansprüche 1 bis 12, **gekennzeichnet durch** mehrere gleichzeitig vorhandene Zustandsanzeigeeinheiten (23).

14. Gerät nach Anspruch 13, **dadurch gekennzeichnet, dass** die Lichtleiter (25) mehrerer Zustandsanzeigeeinheiten (23) in einem Lichtleitelement (32) zu einer Baueinheit zusammengefasst sind.

15. Gerät nach einem der Ansprüche 1 bis 14, **dadurch gekennzeichnet, dass** es sich um ein elektrisch betätigbares, zur Steuerung von Fluidströmen dienendes Ventilgerät (1) handelt.

16. Gerät nach Anspruch 15, **dadurch gekennzeichnet, dass** es einen von fluidischen Ventilträgerkanälen (3) durchsetzten Ventilträger (2) und mindestens eine an dem Ventilträger (2) fixierte, mit mindestens einem der Ventilträgerkanäle (3) kommunizierende, elektrisch betätigbare Ventileinheit (6) aufweist, wobei die Lichtquelle (24) der mindestens einen Zustandsanzeigeeinheit (23) in dem Ventilträger (2) angeordnet ist und der Lichtleiter (25) in den Bereich zwischen der Ventileinheit (6) und dem Ventilträger (2) eingreift.

17. Gerät nach Anspruch 16, **dadurch gekennzeichnet, dass** der Lichtleiter (25) Bestandteil eines im wesentlichen L-förmigen Lichtleitelementes (32) ist, das mit einem ersten Schenkel (33) zwischen die Ventileinheit (6) und den Ventilträger (2) eingreift und sich mit einem zweiten Schenkel (34) im stirnseitigen Bereich der Ventileinheit (6) zu dem Anzeigebereich (26) hin erstreckt.

## Claims

1. Fluid power device with at least one status display unit (23) comprising a light source (24) accommodated and concealed in the device, and a fibre-optic conductor (25) conducting the light signals of the light source (24) to a display area (26) on the outside of the device, wherein the light source (24) is designed to emit polychromatic light and there is interposed in the beam path of the light between the light source (24) and the display area (26) at least one colour filter (42) determining the light colour of the light signals visible in the display area (26), and wherein the colour filter (42) is in the form of a colour filter element (43a, 43b) additional to the fibre-optic conductor (25), **characterised in that** the colour filter element (43a, 43b) is arranged directly on the fibre-optic conductor (25).

2. Device according to claim 1, **characterised in that** the colour filter (42) is interchangeable for the purpose of changing the light colour visible in the display area (26).

3. Device according to claim 2, **characterised in that** several colour filters (42) are provided, with varying filter effect and which may be placed alternately in the beam path of the light to change the light colour visible in the display area (26).

4. Device according to any of claims 1 to 3, **characterised in that** the fibre-optic conductor (25) carries the colour filter element (43a, 43b).

5. Device according to any of claims 1 to 4 **characterised in that**, to change the light colour visible in the display area (26) independently of the fibre-optic conductor (25), the colour filter element (43a, 43b) may be replaced by a colour filter element (43a, 43b) with a different filtering effect.

6. Device according to any of claims 1 to 5, **characterised in that** the fibre-optic conductor (25) is made of a material which provides unfiltered guidance of light of the whole visible wavelength spectrum .

7. Device according to claim 6, **characterised in that** the fibre-optic conductor (25) is made of a colourless, transparent plastic material.

8. Device according to any of claims 1 to 7, **characterised in that** the colour filter element (43a) is located in the interior of the device, at the inner end section (39) of the fibre-optic conductor (25) assigned to the light source (24).

9. Device according to any of claims 1 to 7, **characterised in that** the colour filter element (43b) is located at the outer end section (38) of the fibre-optic conductor (25) assigned to the display area (26).

10. Device according to claim 8 or 9, **characterised in that** the colour filter element (43a) is cap-shaped and is placed on a pin-shaped end section (39) of the fibre-optic conductor (25).

11. Device according to any of claims 1 to 10, **characterised in that** the colour filter element (43a, 43b) is releasably fitted on to the fibre-optic conductor (25).

12. Device according to any of claims 1 to 11, **characterised in that** the colour filter (42) is made of a coloured, transparent material.

13. Device according to any of claims 1 to 12, **characterised by** several status display units (23) existing simultaneously.

14. Device according to claim 13, **characterised in that** the fibre-optic conductors (25) of several status display units (23) are combined in a light guide element (32) to form an assembly.

15. Device according to any of claims 1 to 14, **characterised in that** it is an electrically actuable valve device (1) used for the control of fluid flows.

16. Device according to claim 15, **characterised in that** it has a valve carrier (2) through which pass fluidic valve carrier passages (3), and at least one electrically actuable valve unit (6) fixed to the valve carrier (2) and communicating with at least one of the valve carrier passages (3), wherein the light source (24) of the status display unit or units (23) is provided in the valve carrier (2) and the fibre-optic conductor (25) encroaches into the area between the valve unit (6) and the valve carrier (2).

17. Device according to claim 16, **characterised in that** the fibre-optic conductor (25) is part of a substantially L-shaped light guide element (32) which encroaches with a first leg (33) between the valve unit (6) and the valve carrier (2), and extends with a second leg (34) in the end-face area of the valve unit (6) towards the display area (26).

## Revendications

1. Appareil fluidique, comprenant au moins une unité d'affichage d'état (23), qui comprend une source de lumière (24) cachée dans l'appareil et un conducteur de lumière (25) conduisant les signaux lumineux de la source de lumière (24) en direction d'une zone d'affichage (26) au niveau du côté extérieur de l'appareil, sachant que la source de lumière (24) est réalisée pour émettre de la lumière polychromatique et qu'au moins un filtre de couleurs (42) déterminant la couleur de lumière visible des signaux lumineux au niveau de la zone d'affichage (26) est intercalé dans la trajectoire de rayonnement de la lumière entre la source de lumière (24) et la zone d'affichage (26), et sachant que le filtre de couleurs (42) est réalisé sous la forme d'un élément de filtrage de couleurs (43a, 43b) présent en outre du conducteur de lumière (25), **caractérisé en ce que** l'élément de filtrage de couleurs (43a, 43b) est disposé directement au niveau du conducteur de lumière (25).

2. Appareil selon la revendication 1, **caractérisé en ce que** le filtre de couleurs (42) est réalisé de manière interchangeable pour modifier la couleur de lumière visible au niveau de la zone d'affichage (26).

3. Appareil selon la revendication 2, **caractérisé en ce que** plusieurs filtres de couleurs (42) présentant chacun une action de filtrage différente sont présents, lesquels peuvent être installés en variante dans la trajectoire de rayonnement de la lumière aux fins de la modification de la couleur de lumière visible au niveau de la zone d'affichage (26).

4. Appareil selon l'une quelconque des revendications 1 à 3, **caractérisé en ce que** le conducteur de lumière (25) supporte l'élément de filtrage de couleurs (43a, 43b).

5. Appareil selon l'une quelconque des revendications 1 à 4, **caractérisé en ce que** l'élément de filtrage de couleurs (43a, 43b) peut être échangé par un élément de filtrage de couleurs (43a, 43b) présentant une action de filtrage différente aux fins de la modification de la couleur de lumière visible au niveau de la zone d'affichage (26) indépendamment du conducteur de lumière (25).

6. Appareil selon l'une quelconque des revendications 1 à 5, **caractérisé en ce que** le conducteur de lumière (25) est constitué d'un matériau que la lumière du spectre global de longueurs d'onde visible traverse sans être filtrée.

7. Appareil selon la revendication 6, **caractérisé en ce que** le conducteur de lumière (25) est constitué d'un matériau plastique transparent non coloré.

8. Appareil selon l'une quelconque des revendications 1 à 7, **caractérisé en ce que** l'élément de filtrage de couleurs (43a) est disposé à l'intérieur de l'appareil au niveau de la section terminale (39) intérieure du conducteur de lumière (25), associée à la source de lumière (24).

9. Appareil selon l'une quelconque des revendications 1 à 7, **caractérisé en ce que** l'élément de filtrage de couleurs (43b) est disposé au niveau de la section terminale (38) extérieure du conducteur de lumière (25), associée à la zone d'affichage (26).

10. Appareil selon la revendication 8 ou 9, **caractérisé en ce que** l'élément de filtrage de couleurs (43a) est réalisé à la manière d'un capuchon et est posé sur une section terminale (39) du conducteur de lumière (25) présentant une forme de tige.

11. Appareil selon l'une quelconque des revendications 1 à 10, **caractérisé en ce que** l'élément de filtrage de couleurs (43a, 43b) est enfiché de manière amovible au niveau du conducteur de lumière (25).

12. Appareil selon l'une quelconque des revendications 1 à 11, **caractérisé en ce que** le filtre de couleurs (42) est constitué d'un matériau transparent coloré.

13. Appareil selon l'une quelconque des revendications 1 à 12, **caractérisé par** plusieurs unités d'affichage d'état (23) présentes simultanément.

14. Appareil selon la revendication 13, **caractérisé en ce que** les conducteurs de lumière (25) de plusieurs unités d'affichage d'état (23) sont rassemblés en un élément conducteur de lumière (32) pour former une unité modulaire.

15. Appareil selon l'une quelconque des revendications 1 à 14, **caractérisé en ce qu'**il constitue un appareil à soupape (1) à actionnement électrique servant à commander les écoulements de fluide.

16. Appareil selon la revendication 15, **caractérisé en ce qu'**il présente un support de soupape (2) traversé par des canaux de support de soupape (3) fluidiques et au moins une unité de soupape (6) à actionnement électrique, fixée au niveau du support de soupape (2), communicant avec au moins un des canaux de support de soupape (3), sachant que la source de lumière (24) de l'unité d'affichage d'état (23) au moins au nombre de une est disposée dans le support de soupape (2) et que le conducteur de lumière (25) vient en prise avec la zone entre l'unité de soupape (6) et le support de soupape (2).

17. Appareil selon la revendication 16, **caractérisé en ce que** le conducteur de lumière (25) fait partie intégrante d'un élément conducteur de lumière (32) présentant essentiellement une forme de L, qui vient en prise avec une première branche (33) entre l'unité de soupape (6) et le support de soupape (2) et qui s'étend avec une deuxième branche (34) dans la zone frontale de l'unité de soupape (6) en direction de la zone d'affichage (26).
